# EUROPÄISCHE PATENTSCHRIFT

(11) **EP 1 030 977 B1**
(45) Veröffentlichungstag und Bekanntmachung des Hinweises auf die Patenterteilung: **10.11.2004**
(21) Anmeldenummer: 99969476.3
(22) Anmeldetag: 10.09.1999
(51) Int. Cl.: F16C 11/06

(54) **BALGABDICHTUNG**
BELLOWS SEAL
GARNITURE D'ETANCHEITE ANNELEE

(30) Priorität: 19.09.1998 DE 19843063
(43) Veröffentlichungstag der Anmeldung: 30.08.2000
(73) Patentinhaber: ZF Lemförder Metallwaren AG, 49448 Lemförde (DE)
(72) Erfinder: ABELS, Olaf, D-49191 Belm (DE)
(86) Internationale Anmeldenummer: PCT/DE1999/002873
(87) Internationale Veröffentlichungsnummer: WO 2000/017529

(56) Entgegenhaltungen:
- EP-A- 0 280 018
- DE-A- 4 304 774
- DE-C- 3 632 265
- GB-A- 2 176 235
- US-A- 3 164 389
- US-A- 3 248 955
- US-A- 3 472 540
- PATENT ABSTRACTS OF JAPAN vol. 1995, no. 9, 31. Oktober 1995 (1995-10-31) & JP 07 158631 A (TOYODA GOSEI), 27. Juni 1995 (1995-06-27)
- PATENT ABSTRACTS OF JAPAN vol. 10, no. 10 (M-446), 16. Januar 1986 (1986-01-16) & JP 60 172778 A (TOYODA GOSEI), 6. September 1985 (1985-09-06)

## Beschreibung

Die Erfindung betrifft eine Balgabdichtung an einem Kugelgelenk gemäß dem Oberbegriff des Anspruches 1.

Aus der US 3,164,389 geht eine gattungsgemäße Balgabdichtung an einem Kugelgelenk - mit Gelenkkugel und Kugelzapfen hervor, bei der ein elastischer Dichtungsbalg, der eine zapfenseitige und eine gelenkseitige Öffnung aufweist, vorhanden ist, der den Kugelzapfen des Kugelgelenks umschließt, wobei an der zapfenseitigen Öffnung des Dichtungsbalgs ein L-Ring vorgesehen ist, dessen erster Schenkel im wesentlichen in axialer Richtung weist (Axialschenkel ) und dessen zweiter Schenkel radial nach außen weist (Radialschenkel). Der Radialschenkel greift in eine, an der Innenseite des Dichtungsbalgs verlaufende Nut ein und die Innenseite des Axialschenkels liegt dichtend an einer gegenüberliegenden Lauffläche des Kugelzapfens an.

Die DE 36 18 565 C2 beschreibt ferner eine Balgabdichtung an einem Kugelgelenk-mit Gelenkkugel und Kugelzapfen, insbesondere einem Kugelgelenk eines Fahrwerkslagers - mit einem elastischen Balg, der eine zapfenseitige und eine gelenkseitige Öffnung aufweist und den Kugelzapfen des Kugelgelenks umschließt, wobei an der zapfenseitigen Öffnung des Dichtungsbalgs eine umlaufende, elastische und nach außen weisende Dichtungslippe und ein Ring vorgesehen ist, der in eine an der Innenseite des Balges verlaufende Nut eingreift. Eine zusätzliche Dichtlippe an einer Gleitringbefestigung des Dichtungsbalges dichtet unmittelbar am Kugelzapfen ab.

Eine Balgabdichtung ist auch aus der Deutschen Auslegeschrift DE 12 66 074 bekannt. Diese Auslegeschrift zeigt eine Balgabichtung an einem Kugelgelenk mit Gelenkkugel und Kugelzapfen mit einem elastischen Balg, der eine zapfenseitige und eine gelenkseitige Öffnung aufweist und den Kugelzapfen des Kugelgelenkes axial umschließt, wobei an der zapfenseitigen Öffnung des Dichtungsbalges eine umlaufende, elastische und nach außen weisende Dichtungslippe angebracht ist. Weiterhin ist an der zapfenseitigen Öffnung ein kronenartiger Zylinderring angebracht, der mit Fettaustrittskanälen versehen ist und eine Versteifung des Balgendes bewirken soll.

Im Gebrauch derartiger Balgabdichtungen, insbesondere im Bereich der Fahrwerkslager, hat sich gezeigt, dass eine derartige Ausführungsform anfällig gegen Korrosionen ist und die Dichtungswirkung der Balgabdichtung nach einer zu kurzen Gebrauchszeit nachläßt.

Es ist daher Aufgabe der Erfindung eine Baldabdichtung zur Verfügung zu stellen, die eine bessere und dauerhaftere Abdichtung bewirkt und deren Korrosionsanfälligkeit reduziert ist.

Die Aufgabe der Erfindung wird durch die Merkmale des Anspruches 1 gelöst.

Demgemäß wird vorgeschlagen, eine Balgabdichtung für ein Kugelgelenk - mit Gelenkkugel und Kugelzapfen, insbesondere für ein Kugelgelenk eines Fahrwerkslagers - mit einem elastischen Balg, der eine zapfenseitige und eine gelenkseitige Öffnung aufweist und den Kugelzapfen des Kugelgelenkes axial umschließt, wobei an der zapfenseitigen Öffnung des Dichtungsbalgs eine umlaufende, elastische und nach außen weisende Dichtungslippe vorgesehen ist, welche auf einer Dichtungsfläche anliegt und wobei an der zapfenseitigen Öffnung ein L-Ring vorgesehen ist, dessen erster Schenkel im wesentlichen in axiale Richtung weist (Axialschenkel) und dessen zweiter Schenkel radial nach außen weist (Radialschenkel), wobei der Radialschenkel in eine, an der Innenseite des Dichtungsbalgs verlaufende Nut eingreift und die Innenseite des Axialschenkels dichtend an einer gegenüberliegenden Lauffläche anliegt. Radial innerhalb des L-Rings ist ein Zwischenring auf den Kugelzapfen so aufgepreßt daß dessen Außenseite die Lauffläche für den Axialschenkel des L-Rings bildet.

Durch diese erfindungsgemäße Ausführungsform wird erreicht, dass die Balgabdichtung über eine Vordichtung und eine Hauptdichtung verfügt. Die Vordichtung besteht aus der Dichtungslippe und der gegenüberliegenden Dichtungsfläche. Diese Vordichtung weist im wesentlichen groben Schmutz und sonstige gröbere Verunreinigungen ab. Die Hauptdichtung liegt im eschützten Bereich und wird durch den L-Ring und die Lauffläche gebildet. Durch eine entsprechende Materialwahl des L-Rings und des Zwischenrings sind besonders günstige Gleiteigenschaften und Dichteigenschaften zwischen L-Ring und Zwischenring zu erreichen. Durch den Zwischenring wird ferner eine Korrosion am Dichtsitz vermieden. Vorteilhafter Weise kann der Zwischenring U-förmig ausgestaltet werden, wobei die äußeren Schenkel, beziehungsweise die äußeren Wulste radial nach außen weisen und auf diese Weise eine Lauffläche zwischen den beiden Wulsten gebildet wird, in denen der L-Ring in seiner Position gut definiert angeordnet ist.

In einer vorteilhaften Ausgestaltung bilden die Dichtlippe, die Dichtfläche, der L-Ring und der Kugelzapfen einen Hohlraum, der zur Verbesserung der Dichtung auch mit Fett, Silikonen oder anderen Mitteln gefüllt werden kann.

Zur Vereinfachung der Montage kann der Zwischenring auch in Umlaufrichtung geteilt ausgeführt werden, so daß der U-Ring aus zwei baugleichen, einander gegenüberliegenden L-förmigen Ringen zusammengesetzt wird.

Eine weitere besonders vorteilhafte Ausgestaltung der Balgabdichtung besteht darin, daß die Länge des Radialschenkels des L-Rings und die Tiefe der Nut, in die der Radialschenkel eingreift, so aufeinander abgestimmt werden, daß ein Abstand zwischen der Außenseite des Axialschenkels des L-Rings und dem Balg gebildet wird. Durch diese Ausführung erhält der Dichtungsbalg eine zusätzliche Bewegungsfreiheit und Elastizität, was zu einer längeren Lebensdauer des Dichtungsbalgs führt.

Die Balgabdichtung kann vorteilhaft auch so ausgeführt werden, daß der L-Ring so elastisch ist, daß der Winkel zwischen dem Axialschenkel und dem Radialschenkel des L-Rings bei der Montage veränderbar ist. Das heißt dem L-Ring wird bei der Montage eine Spannung mitgegeben, die den Sitz des L-Rings auf der Lauffläche verbessert. Ein vorzeitiges Lösen oder Abrutschen des L-Rings von der Lauffläche wird so vermieden.

Weiterhin kann der L-Ring und/oder der Zwischenring aus Kunststoff ausgeführt werden. Hierbei erweist sich graphitverstärktes PTFE als besonders vorteilhaft.

Eine besonders vorteilhafte Ausführung der Konstruktion weist also einen L-förmigen Dichtring aus Kunststoff auf, der gleichzeitig eine formstabilisierende Wirkung für den zapfenseitigen Dichtsitz besitzt. Als Material für den L-Ring kann graphitverstärktes PTFE dienen, welches sich in Dichtungssystemen bewährt hat und dem reinen PTFE eine größere Verschleißfestigkeit und Elastitzität voraus hat. Das Aufweiten des L-Rings bei der Montage führt zu einer erhöhten Flächenpressung, die das Eindringen von Wasser verhindert.

Diese Konstruktionsweise separiert das Abweisen von Schmutz und Spritzwasser vom Abdichten gegen Sickerwasser und sonstige Feuchtigkeit. Für eine optimale Funktionsweise ist es vorteilhaft die Dichtungsfläche, die der Dichtungslippe des Dichtungsbalges gegenüberliegt zu beschichten, um den Verschleiß an den Dichtungsflächen nicht durch Rostpartikel zu erhöhen. Eine andere Möglichkeit besteht darin eine korrosionsgeschützte Zwischenscheibe als Dichtungsfläche zu verwenden.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus den Unteransprüchen und der nachfolgenden Beschreibung mehrerer bevorzugter Ausführungsbeispiele unter Bezugnahme auf die Zeichnungen.

Es zeigen:
Figur 1: Eine nicht erfindungsgemäße Balgabdichtung mit L-Ring ;
Figur 2: Eine erfindungsgemäße Balgabdichtung mit L-Ring und Zwischenring;
Figur 3: Eine erfindungsgemäße Balgabdichtung mit zweigeteiltem Zwischenring.

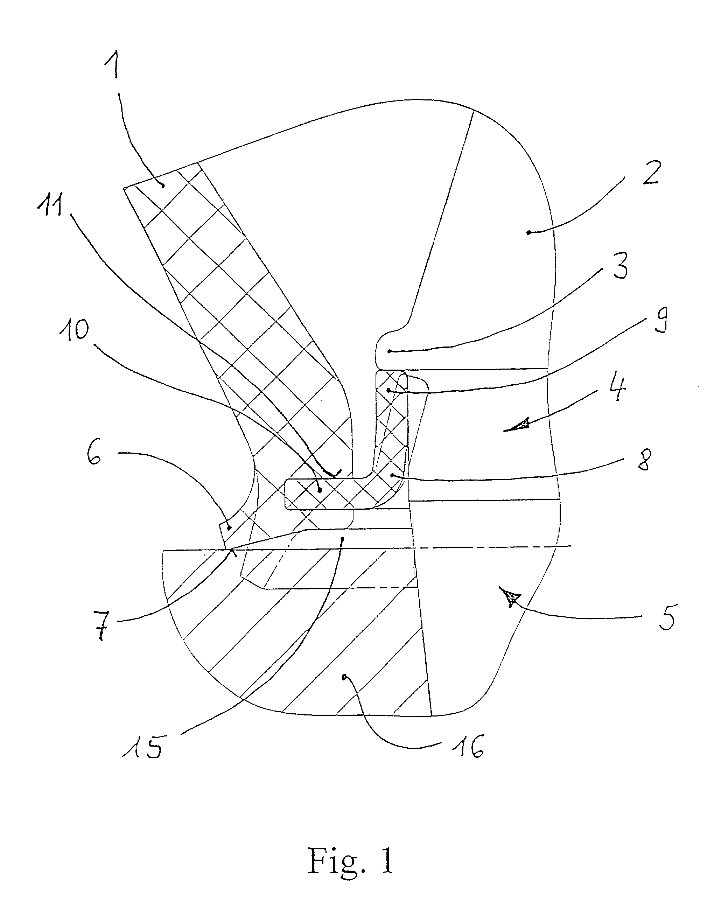

Die Figur 1 zeigt einen Ausschnitt eines Querschnitts der Balgabdichtung eines Kugelgelenkes eines Fahrwerkslagers mit einem Kugelzapfen 2, der - hier nicht sichtbar-nach oben zur Gelenkkugel ausläuft. Der Kugelzapfen weist einen umlaufenden Wulst 3 auf, mit einem sich nach unten anschließenden zylindrischen Teil 4, der nach unten in einen konischen Teil 5 übergeht. Auf dem konischen Teil 5 ist das Hebelauge 16 der Fahrwerkslagerung aufgesetzt. Das Hebelauge 16 weist im Bereich der Balgabdichtung eine Dichtungsfläche 7 auf, auf der sich die Dichtungslippe 6 des Dichtungsbalgs 1 abstützt. Im Endbereich der zapfenseitigen Öffnung des Dichtungbalges 1 weist der Dichtungsbalg eine Nut 11 auf, in die der Radialschenkel 10 des L-Rings 8 eingreift beziehungsweise in der er verankert ist. Meist ist der Radialschenkel 10 in den Dichtungsbalg 1 einvulkanisiert. Der L-Ring 8 verfügt über einen Axialschenkel 9, der auf den zylindrischen Teil 4 des Kugelzapfens aufgeschoben ist und vom Wulst 3 des Kugelzapfens fixiert wird.

Die Dichtungslippe 6 des Dichtungsbalgs 1 ist im entspannten, nicht montierten Zustand so ausgeführt, daß sie - wie durch den nicht schraffierten Bereich dargestellt - schräg nach unten läuft, wärend sie im montierten Zustand unter Vorspannung auf der Dichtungsfläche 7 aufliegt. Hinter der Dichtungslippe 6 ist ein Hohlraum 15 entstanden, der durch die Dichtungslippe, die Dichtungsfläche des L-Rings und des Kugelzapfens begrenzt wird.

Ebenso weist der Axialschenkel 9 des L-Rings vor der Montage nach innen (nicht schraffierte Darstellung) und erhält bei der Montage eine Vorspannung.

Sowohl die Oberfläche des Kugelzapfens im Bereich der Lauffläche des L-Rings als auch die Dichtungsfläche des Hebelauges sind vorzugsweise korrosionsgeschützt, so daß Rostpartikel auf den Dichtflächen vermieden werden können.

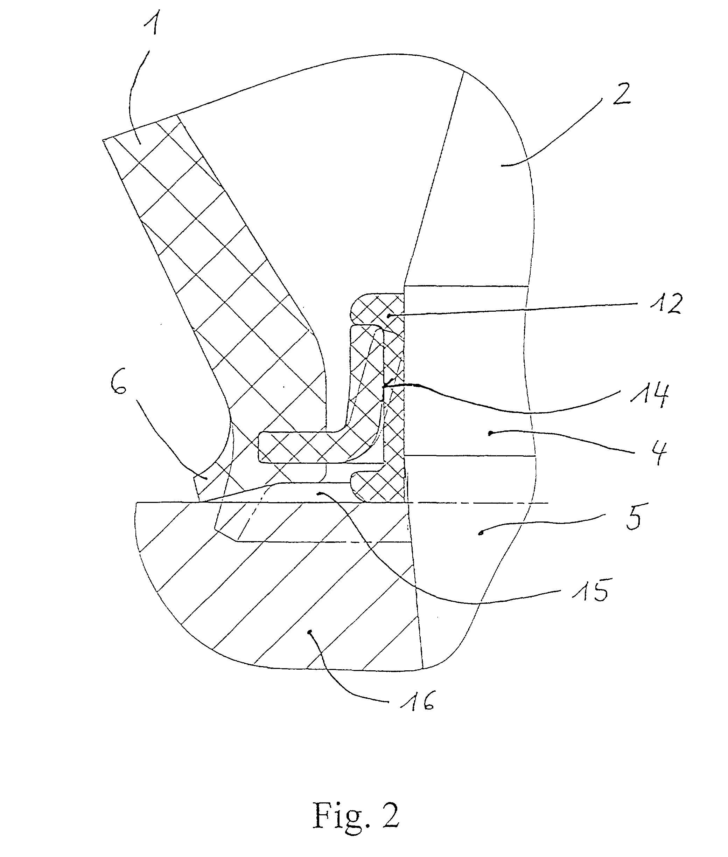

Die Figur 2 zeigt eine Ausführung der erfindungsgemäßen Balgabdichtung, bei der zusätzlich zu Figur 1 ein Zwischenring 12, zwischen dem L-Ring 8 und dem Kugelzapfen 2, angebracht ist. Der Zwischenring 12 liegt mit seiner Innenseite fest am zylindrisch-konischen Teil des Kugelzapfens 2 an und weist endseitig jeweils einen Wulst und auf, die die Lauffläche 14 für den Axialschenkel des L-Ringes bilden. Durch entsprechende Materialwahl für den Zwischenring 12 und dem L-Ring 8 können die Dichtungseigenschaften und Verschleißeigenschaften an der Lauffläche 14 optimiert werden.

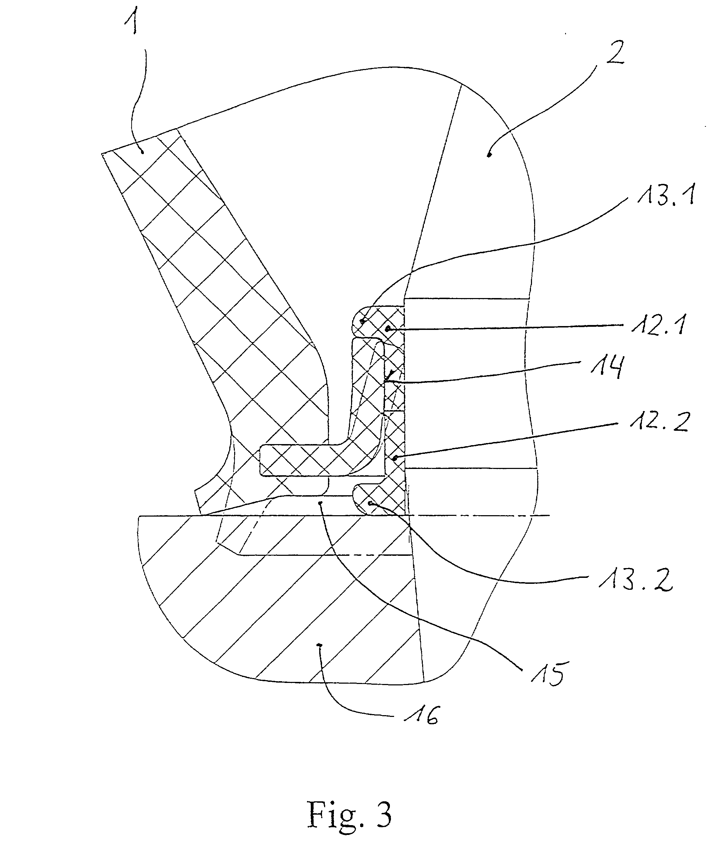

Die Figur 3 zeigt eine Variation der Figur 2 , in der der Zwischenring 12 zweiteilig aus den Teilen 12.1 und 12. 2 ausgeführt ist und auf diese Weise eine vereinfachte Montage und ein einfacheres Werkzeug zur Herstellung des Ringes ermöglicht. Außerdem vermeidet man bei der Herstellung eine Formteilung auf der Lauffläche bei der Verwendung eines Kunststoffringes.

Insgesamt wird durch die oben gezeigten und oben beschriebenen Ausführungen der Balgabdichtung erreicht, daß die Abdichtungsleistung verbessert wird und der Verschleiß der Balgabdichtung reduziert wird. Dies bewirkt eine Erhöhung der Lebensdauer der erfindungsgemäßen Balgabdichtung gegenüber dem Stand der Technik.

### BEZUGSZEICHENLISTE:

- 1: Dichtungsbalg
- 2: Kugelzapfen
- 3: Wulst
- 4: zylindrischer Teil des Kugelzapfens
- 5: konischer Teil des Kugelzapfens
- 6: Dichtungslippe
- 7: Dichtungsfläche
- 8: L-Ring
- 9: Axialschenkel des L-Rings
- 10: Radialschenkel des L-Rings
- 11: Nut
- 12: Zwischenring
- 12.1: erster Teil des Zwischenrings
- 12.2: zweiter Teil des Zwischenrings
- 13.1: oberer Wulst des Zwischenrings
- 13.2: unterer Wulst des Zwischenrings
- 14: Lauffläche
- 15: Hohlraum
- 16: Hebelauge

## Patentansprüche

1. Balgabdichtung (1) an einem Kugelgelenk - mit Gelenkkugel und Kugelzapfen (2), insbesondere einem Kugelgelenk eines Fahrwerkslagers -, mit einem elastischen Balg, der eine zapfenseitige und eine gelenkseitige Öffnung aufweist und den Kugelzapfen (2) des Kugelgelenks umschließt, wobei an der zapfenseitigen Öffnung ein L-Ring vorgesehen ist, dessen erster Schenkel (9) im wesentlichen in axiale Richtung weist und einen Axialschenkel bildet und dessen zweiter Schenkel (10) radial nach außen weist und einen Radialschenkel bildet und der Radialschenkel (10) in eine, an der Innenseite des Dichtungsbalgs (1) verlaufende Nut (11) eingreift und die Innenseite des Axialschenkels (9) dichtend an einer gegenüberliegenden Lauffläche anliegt,
**dadurch gekennzeichnet, dass** an der zapfenseitigen Öffnung des Dichtungsbalgs ( 1 ) eine umlaufende, elastische und nach außen weisende Dichtungslippe (6), welche auf einer Dichtungsfläche (7) anliegt, vorgesehen ist und dass radial innerhalb des L-Rings (8) ein Zwischenring (12) auf den Kugelzapfen (2) so aufgepreßt ist, dass dessen Außenseite eine Lauffläche für den Axialschenkel des L-Rings (9) bildet.

2. Balgabdichtung gemäß Anspruch 1, **dadurch gekennzeichnet, dass** zwischen Dichtlippe (6), Dichtfläche (7), L-Ring (8) und Kugelzapfen (2) ein Hohlraum (15) gebildet ist.

3. Balgabdichtung gemäß einem der Ansprüche 1 oder 2, **dadurch gekennzeichnet, dass** der Zwischenring (12) ein U-förmiger Ring ist, dessen äußere Schenkel, beziehungsweise Wulste (13.1, 13.2), radial nach außen weisen.

4. Balgabdichtung gemäß einem der Ansprüche 1-3, **dadurch gekennzeichnet, dass** der Zwischenring (12) in Umlaufrichtung geteilt ausgeführt ist.

5. Balgabdichtung gemäß einem der Ansprüche 1-4, **dadurch gekennzeichnet, dass** die Länge des Radialschenkels des L-Rings (10) und die Tiefe der Nut so aufeinander abgestimmt sind, dass ein Abstand zwischen der Außenseite des Axialschenkels des L-Rings (9) und dem Balg (1) besteht.

6. Balgabdichtung gemäß einem der Ansprüche 1-5, **dadurch gekennzeichnet, dass** der L-Ring (8) so elastisch ausgebildet ist, dass der Winkel zwischen dem Axialschenkel und dem Radialschenkel bei der Montage veränderbar ist.

7. Balgabdichtung gemäß einem der Ansprüche 1-6, **dadurch gekennzeichnet, dass** zapfenseitig ein Wulst (3) zur Aufschubbegrenzung des L-Rings (8) und/oder des Zwischenrings (12) vorgesehen ist.

8. Balgabdichtung gemäß einem der Ansprüche 1-7, **dadurch gekennzeichnet, dass** der L-Ring (8) und/oder der Zwischenring (12) aus Kunststoffbesteht.

9. Balgabdichtung gemäß einem der Ansprüche 1-7, **dadurch gekennzeichnet, dass** der L-Ring (8) und/oder der Zwischenring (12) aus Metall besteht.

10. Balgabdichtung gemäß Anspruch 9, **dadurch gekennzeichnet, dass** das Metall des L-Rings (8) und/oder des Zwischenrings (12) beschichtet ist.

11. Balgabdichtung gemäß einem der Ansprüche 1-10, **dadurch gekennzeichnet, dass** die Dichtungsfläche (7) im Bereich der Dichtungslippe (6) des Balges (1) eine Nut aufweist, in welche die Dichtungslippe (6) eingreift.

## Claims

1. Bellows-type seal (1) on a ball joint (having a joint ball and a ball pin (2), in particular a ball joint of a chassis bearing), said seal having an elastic bellows which has an aperture on the pin side and an aperture on the joint side and encloses the ball pin (2) of the ball joint, wherein there is provided, at the aperture on the pin side, an L-ring whose first leg (9) points substantially in the axial direction and forms an axial leg and whose second leg (10) points radially outwards and forms a radial leg, and the radial leg (10) engages in a groove (11) extending on the inner side of the sealing bellows (1), and the inner side of the axial leg (9) rests, in a sealing manner, against an opposed running face,
**characterised in that** a circumferential, elastic and outwardly pointing sealing lip (6), which rests on a sealing face (7), is provided at the aperture of the sealing bellows (1) on the pin side, and that an intervening ring (12) is pressed onto the ball pin (2), radially inside the L-ring (8), in such a way that its outer side forms a running face for the axial leg of the L-ring (9).

2. Bellows-type seal according to claim 1, **characterised in that** a cavity (15) is formed between the sealing lip (6), the sealing face (7), the L-ring (8) and the ball pin (2).

3. Bellows-type seal according to one of claims 1 or 2, **characterised in that** the intervening ring (12) is a U-shaped ring whose outer legs, or beads (13.1, 13.2), point radially outwards.

4. Bellows-type seal according to one of claims 1 to 3, **characterised in that** the intervening ring (12) is of divided design in the circumferential direction.

5. Bellows-type seal according to one of claims 1 to 4, **characterised in that** the length of the radial leg of the L-ring (10) and the depth of the groove are coordinated with one another in such a way that there is an interval between the outer side of the axial leg of the L-ring (9) and the bellows (1).

6. Bellows-type seal according to one of claims 1 to 5, **characterised in that** the L-ring (8) is of elastic construction such that the angle between the axial leg and the radial leg can be varied when fitting takes place.

7. Bellows-type seal according to one of claims 1 to 6, **characterised in that** a bead (3) is provided on the pin side for limiting the pushing-on of the L-ring (8) and/or of the intervening ring (12).

8. Bellows-type seal according to one of claims 1 to 7, **characterised in that** the L-ring (8) and/or the intervening ring (12) consists of plastic.

9. Bellows-type seal according to one of claims 1 to 7, **characterised in that** the L-ring (8) and/or the intervening ring (12) consists of metal.

10. Bellows-type seal according to claim 9, **characterised in that** the metal of the L-ring (8) and/or of the intervening ring (12) is coated.

11. Bellows-type seal according to one of claims 1 to 10, **characterised in that** the sealing face (7) has, in the region of the sealing lip (6) of the bellows (1), a groove in which the sealing lip (6) engages.

## Revendications

1. Garniture d'étanchéité à soufflet (1) pour une articulation à rotule avec rotule d'articulation et pivot à rotule (2), notamment pour une articulation à rotule d'un palier de châssis, avec un soufflet élastique comportant une ouverture côté pivot et côté articulation et enfermant le pivot à rotule (2) de l'articulation à rotule, un anneau en L étant prévu au niveau de l'ouverture côté pivot, dont la première branche (9) est essentiellement dirigée dans le sens axial et forme une branche axiale, la deuxième branche (10) étant dirigée dans le sens radial et formant une branche radiale, la branche radiale (10) venant en prise dans une rainure (11) longeant le côté intérieur du soufflet d'étanchéité (1) et le côté intérieur de la branche axiale (9) épousant une surface de roulement se trouvant en face et assurant l'étanchéité, **caractérisée en ce qu'**une lèvre d'étanchéité (6) périphérique, élastique, dirigée vers l'extérieur et épousant une surface d'étanchéité (7) est prévue au niveau de l'ouverture côté pivot du soufflet d'étanchéité (1), et qu'un anneau intermédiaire (12) est pressé sur le pivot à rotule (2) de manière radiale au sein de l'anneau en L (8), de telle sorte que son côté extérieur crée une surface de roulement pour la branche axiale de l'anneau en L (9).

2. Garniture d'étanchéité à soufflet selon la revendication 1, **caractérisée en ce qu**'une cavité (15) est formée entre la lèvre d'étanchéité (6), la surface d'étanchéité (7), l'anneau en L (8) et le pivot à rotule (2).

3. Garniture d'étanchéité à soufflet selon l'une quelconque des revendications 1 et 2, **caractérisée en ce que** l'anneau intermédiaire (12) représente un anneau en forme de U dont les branches extérieures ou les boudins (13.1, 13.2) sont dirigés vers l'extérieur.

4. Garniture d'étanchéité à soufflet selon l'une quelconque des revendications 1 à 3, **caractérisée en ce que** l'anneau intermédiaire (12) est divisé dans le sens périphérique.

5. Garniture d'étanchéité à soufflet selon l'une quelconque des revendications 1 à 4, **caractérisée en ce que** la longueur de la branche radiale de l'anneau en L (10) et la profondeur de la rainure sont coordonnées de telle sorte qu'une distance existe entre le côté extérieur de la branche axiale de l'anneau en L (9) et le soufflet (1).

6. Garniture d'étanchéité à soufflet selon l'une quelconque des revendications 1 à 5, **caractérisée en ce que** l'anneau en L (8) est élastique de telle sorte que l'angle entre la branche axiale et la branche radiale est modifiable lors du montage.

7. Garniture d'étanchéité à soufflet selon l'une quelconque des revendications 1 à 6, **caractérisée en ce qu'**un boudin (3) est prévu côté pivot, en vue de délimiter la course de l'anneau en L (8) et/ou de l'anneau intermédiaire (12).

8. Garniture d'étanchéité à soufflet selon l'une quelconque des revendications 1 à 7, **caractérisée en ce que** l'anneau en L (8) et/ou l'anneau intermédiaire (12) est en matière synthétique.

9. Garniture d'étanchéité à soufflet selon l'une quelconque des revendications 1 à 7, **caractérisée en ce que** l'anneau en L (8) et/ou l'anneau intermédiaire (12) est en métal

10. Garniture d'étanchéité à soufflet selon la revendication 9, **caractérisée en ce que** le métal de l'anneau en L (8) et/ou de l'anneau intermédiaire (12) est muni d'un revêtement.

11. Garniture d'étanchéité à soufflet selon l'une quelconque des revendications 1 à 10, **caractérisée en ce que** la surface d'étanchéité (7) au niveau de la lèvre d'étanchéité (6) du boudin (1) comporte une rainure dans laquelle ladite lèvre d'étanchéité (6) vient en prise.
